# FASCICULE DE BREVET EUROPEEN

(11) **EP 1 255 178 B1**
(45) Date de publication et mention de la délivrance du brevet: **11.02.2004**
(21) Numéro de dépôt: 01810436.4
(22) Date de dépôt: 03.05.2001
(51) Int. Cl.: G06F 1/00

(54) **Dispositif de sécurité pour transaction en ligne**
Sicherheitsvorrichtung für On-line Transaktionen
Security device for on-line transactions

(43) Date de publication de la demande: 06.11.2002
(73) Titulaire: Berner Fachhochschule Hochschule für Technic und Architektur Biel, 2501 Bienne (CH)
(72) Inventeur: Müller, Lorenz, 2505 Bienne (CH); Jacomet, Marcel, 2543 Lengnau (CH)
(74) Mandataire: Gresset, Jean

(56) Documents cités:
- WO-A-87/03977
- DE-A- 19 858 310
- DE-C- 4 125 198
- US-A- 5 432 851

## Description

La présente invention se rapporte aux dispositifs de sécurité, du type de ceux destinés à identifier un partenaire et/ou assurer l'intégrité d'une communication lors d'une transaction en ligne, par exemple sur le réseau Internet. De tels dispositifs sont particulièrement utiles lors d'achats par courrier électronique ou pour payer des services tels que l'octroi de licences ou la commande de documents.

Un dispositif de ce type est décrit dans le document US 5'136'644. Il se présente sous forme d'un boîtier comportant un micro-contrôleur, un capteur photo-sensible formé de trois photo-transistors en ligne et destiné à être appliqué contre un écran, par exemple d'ordinateur, pour recevoir un signal optique codé, un clavier permettant d'adresser un message, un affichage pour rendre accessible les informations reçues par le dispositif ou celles à envoyer au moyen du clavier, et une liaison avec un poste, par exemple un ordinateur, un écran de télévision ou un terminal de téléphone.

Le signal est analysé par le dispositif et un code d'accès, obtenu par le traitement des informations contenues dans le signal avec le programme du micro-contrôleur, est affiché par l'écran. Ce code est ensuite composé sur le clavier, pour donner accès à un site ou un ordre de payement.

Un tel dispositif nécessite des moyens de liaison avec le poste, lequel doit être aménagé à cet effet. De plus, la configuration du capteur photo-sensible limite le flux d'informations transmises sous forme optique à quelques centaines de bits au maximum. Au-delà, le temps nécessaire à la transmission dépasse deux à trois secondes, temps au-delà duquel l'attente devient désagréable et la stabilité du dispositif est difficile à assurer.

Le document WO-A-87 03977 concerne un dispositif de sécurité comprenant un capteur pour recevoir un signal et un programme de traitement pour premièrement générer un code à partir du signal provenant du capteur et d'informations enregistrées dans le dispositif et deuxièmement transmettre ce code aux moyens de communication pour le rendre accessible à l'opérateur et ensuite à un ordinateur.

Le document DE-C-41 25 198 concerne un dispositif de sécurité comprenant une puce de décryptage, une mémoire dans laquelle des informations spécifiques à l'opérateur peuvent être enregistrées, un capteur biométrique agencé pour saisir des données relatives à l'opérateur, le dispositif étant agencé pour comparer les données saisies par ledit capteur biométrique avec les informations contenues dans la mémoire, où au moyen d'infra-rouge des données sont transmises entre le dispositif et un ordinateur, ces données pouvant être cryptées au moyen de la puce de cryptage.

Le document DE-A-198 58 310 concerne un dispositif comprenant un clavier, un microprocesseur, une mémoire, dans laquelle des informations spécifiques à l'opérateur peuvent être enregistrées, et un capteur biométrique agencé pour saisir des données relatives à l'opérateur, ledit dispositif étant agencé pour comparer les données saisies par ledit capteur biométrique avec les informations contenues dans la mémoire et pour commander la mise en route du dispositif en cas de conformité.

Le document US 5'432'851 concerne un système de contrôle d'accès faisant appel à un ordinateur muni d'un écran et d'un clavier, et un dispositif de contrôle comportant un capteur photoélectrique permettant de recevoir un signal au travers de l'écran, un circuit électronique de traitement du signal, un affichage ainsi qu'une mémoire contenant des informations permettant un décryptage du signal, pour générer un code d'accès rendu accessible au moyen de l'affichage.

Ce document ne dit rien à propos du capteur photoélectrique. Il laisse, tout au plus, supposer qu'il pourrait être formé d'un seul composant, les informations étant adressées par une succession de points clairs et sombres en un endroit de l'écran. La vitesse de transmission serait alors encore plus faible que dans le dispositif décrit plus haut.

Un opérateur peut accéder aux informations contenues dans l'ordinateur ou dans un autre ordinateur, ceux-ci étant en réseau, en introduisant ce code au moyen du clavier, la transmission des informations s'effectuant de manière cryptée, donc plus sûre. Toutefois, les risques d'usage illicite en cas de vol, ou de contestation par le titulaire, ne peuvent être écartés.

En d'autres termes, il est possible d'éviter qu'un code soit volé, du fait qu'il change à chaque intervention. De plus, le dispositif peut être utilisé avec n'importe quel type d'ordinateur, même en un lieu public, sans risque de voir approprié le code qu'il utilise. Par contre, en cas de vol du dispositif lui-même, l'accès aux informations n'est plus sécurisé. Le but de la présente invention est de pallier cet inconvénient.

Le dispositif selon l'invention tel que défini dans la revendication 1 est donc destiné à assurer des transactions sécurisées en ligne entre un pourvoyeur de services et un opérateur, et être utilisé par l'opérateur avec un poste de type informatique comportant un écran et un clavier, et relié au moins médiatement avec un ordinateur géré par le pourvoyeur, la liaison étant interactive. Ce dispositif comprend:
- un capteur photo-électrique destiné à être appliqué contre l'écran pour recevoir un signal provenant de l'ordinateur,
- une mémoire morte, dans laquelle un programme d'analyse du signal et un programme de décryptage sont enregistrés,
- une mémoire morte de type programmable, connue sous le nom de PROM ou EPROM par exemple, dans laquelle des informations spécifiques à l'opérateur peuvent être enregistrées,
- un microprocesseur pour mettre en application ces programmes et assurer le traitement et le décryptage du signal reçu par le capteur et le transformer en un code, et
- des moyens de communication pour rendre le code accessible à l'opérateur.

Il est caractérisé en ce qu'il comporte, en outre, un capteur biométrique pour saisir des données relatives à l'opérateur et des moyens de verrouillage disposés entre le capteur photo-électrique et les moyens de communication, en ce que la mémoire morte comprend un programme de traitement des données provenant du capteur biométrique, et en ce que le microprocesseur est agencé pour:
- mettre en application le programme de traitement pour générer une information à partir des données saisies par le capteur biométrique,
- comparer l'information ainsi obtenue avec les informations contenues dans la mémoire morte de type programmable,
- commander les moyens de déverrouillage en cas de conformité,
- transmettre le code aux moyens de communication pour le rendre accessible à l'opérateur, de manière à ce qu'il puisse l'introduire au moyen du clavier et le transmettre à l'ordinateur, en vue d'autoriser la transaction.

Il était certes connu, par le document US 6213403 notamment, de faire appel à la biométrie dans le domaine de la sécurité. Ce document décrit une carte de crédit munie d'un lecteur d'empreinte digitale et d'un connecteur permettant de relier la carte à un terminal permettant de lire les informations issues de la carte et les envoyer à l'ordinateur du pourvoyeur de service. Une telle solution nécessite donc des moyens complémentaires qui ne sont pas nécessairement disponibles. De plus, ils font intervenir des contacts électriques dont la fiabilité peut poser problème. Par ailleurs, le volume d'informations à transmettre est important pour permettre une identification sûre de l'opérateur et de pouvoir ainsi le différencier de tous les autres clients enregistrés.

Dans le dispositif selon l'invention, les données correspondant à la morphologie de l'opérateur sont mises en mémoire dans sa mémoire morte de type programmable, de telle sorte que l'identification de la personne se fait par le dispositif lui-même. Il n'est ainsi pas nécessaire de faire enregistrer son empreinte par l'ordinateur central. On peut ainsi éviter des problèmes relatifs à la protection des données relatives aux personnes.

De manière avantageuse, les moyens de communication sont formés d'une cellule d'affichage, et le capteur biométrique est agencé pour lire une empreinte digitale.

De bonnes conditions de travail peuvent être obtenues avec un capteur photo-électrique formé d'une matrice de cellules photo-électriques dont le pas est au moins deux fois plus petit que celui de la matrice de points issue du signal provenant de l'ordinateur et affichée à l'écran. Une optique, avantageusement formée d'une lentille convergente, est disposée à l'avant de chacune des cellules photo-électriques, pour faire converger la lumière provenant d'une portion seulement de l'écran, cette portion étant plus petite qu'un des points de la matrice de points..

D'autres avantages et caractéristiques de l'invention ressortiront de la description qui va suivre, faite en regard du dessin annexé, dans lequel:
- La figure 1 montre un dispositif de sécurité selon l'invention, dans l'environnement permettant sa mise en oeuvre,
- La figure 2 est un schéma logique du dispositif selon l'invention, et
- La figure 3 représente un organigramme relatif au fonctionnement du dispositif.

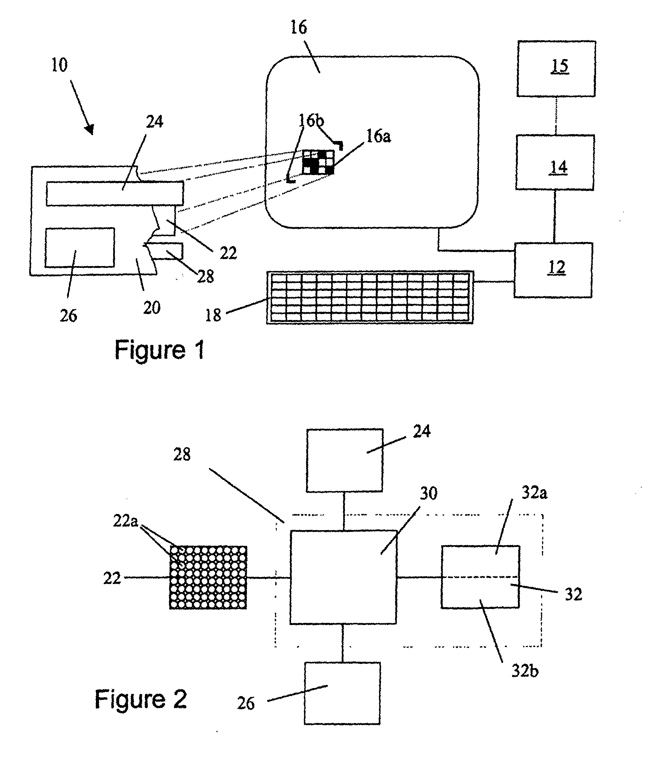

La figure 1 représente, de manière schématique, un dispositif de sécurité 10 selon l'invention, disposé dans un environnement informatique faisant appel à un ordinateur comportant plus particulièrement une unité centrale 12 reliée à un modem 14 pour permettre une liaison à un réseau tel qu'Internet et, au travers de celui-ci, à un ordinateur 15 pourvoyeur de services, un écran 16 et un clavier 18, également reliés à l'unité centrale 12.

Une portion de l'écran 16 affiche une plage rectangulaire formée d'une alternance de points noirs et blancs, définissant une structure matricielle binaire 16a, dont l'origine et la fonction seront expliquées plus en détail ci-après, ainsi que deux repères 16b destinés à permettre le positionnement du dispositif 10 sur l'écran 16.

Le dispositif 10 se présente sous forme d'une carte, avantageusement du format habituel aux cartes de crédit, et comportant une plaque 20 en matière plastique, formant support et définissant le pourtour du dispositif et dont une partie a été arrachée pour permettre de voir les composants qui y sont intégrés. Ces composants sont un capteur photo-électrique 22, apparent sur la face arrière de la plaque 20, une cellule d'affichage 24 et un capteur biométrique 26 apparents sur la face avant de la plaque 20, et une électronique de commande 28 intégrée dans la plaque 20.

Ils sont alimentés par une source d'énergie électrique, non représentée au dessin, qui peut être une pile ou un ensemble de cellules photo-électriques alimentant un accumulateur ou un condensateur.

Le capteur 22 est formé d'une matrice de cellules photo-électriques 22a de type similaire à ceux utilisés dans les caméras vidéo, ayant un pas environ deux à trois fois inférieur au pas de la structure matricielle 16a, chaque cellule comportant une micro-lentille pour focaliser la lumière provenant d'une portion de l'écran 16 plus petite qu'un point de la structure matricielle 16a. Il est relié à l'électronique de commande 28.

La cellule d'affichage 24 est de type à cristaux liquides, permettant d'afficher au moins six chiffres, avantageusement jusqu'à dix chiffres ou lettres.

Tant le capteur 22 que la cellule 24 sont de modèle courant pour l'homme du métier et ne présentent aucune caractéristique particulière.

Le capteur biométrique est du type tel que commercialisé par la maison Infineon AG (Stuttgart, DE) sous l'appellation "FingerTIP", ou décrit dans le brevet US 6069970. Ce type de capteur peut être logé dans un espace très restreint et consomme peu d'énergie tout en permettant d'identifier une personne à partir d'une empreinte digitale. Il nécessite, en outre, des moyens informatiques modestes, comme cela apparaîtra plus loin.

Ainsi que le montre la figure 2, l'électronique de commande 28 comprend un microprocesseur 30 et une mémoire 32 reliée au microprocesseur de manière à permettre un échange d'informations entre eux. Le microprocesseur 30 reçoit des informations du capteur photo-électrique 22 et du capteur biométrique 26, et transmet des ordres à la cellule d'affichage 24.

Le microprocesseur 30 est agencé pour effectuer trois types d'opérations, soit:
- L'analyse des informations provenant du capteur biométrique 26 qui, en cas de résultat positif, commande un déverrouillage temporisé autorisant les autres fonctions;
- Le décryptage des informations reçues par le capteur 22; et
- La commande de l'affichage 24 à partir de l'information obtenue lors du décryptage.

Ces opérations sont effectuées en relation avec les programmes et les informations stockés dans la mémoire 32. Cette dernière comporte une première partie 32a, non-volatile ou morte, dans laquelle sont enregistrés les programmes de commande du microprocesseur 30, de type généralement connu sous le nom de mémoire ROM, et une deuxième partie 32b, formée d'une mémoire morte programmable, par exemple du type PROM, c'est-à-dire pouvant être programmée une fois et dans laquelle se trouvent des informations spécifiques au dispositif et à son opérateur, se rapportant d'une part au décryptage, d'autre part à la biométrie. Il serait également possible d'utiliser une mémoire de type EPROM, c'est-à-dire permettant une reprogammation dans certaines conditions.

Pour bien comprendre ces opérations, la description précisera tout d'abord le fonctionnement du dispositif, puis la logique de commande appliquée par le microprocesseur 30.

Avant de pouvoir être utilisé, le dispositif doit être initialisé. Un programme est introduit dans la mémoire 32b, à partir de l'ordinateur 15. Ce programme permet de générer, à partir de l'information reçue par le capteur 22, un code numérique ou alpha-numérique, typiquement de 6 à 10 signes. La même opération doit pouvoir être réalisée par l'ordinateur 15, lorsqu'il est sollicité, comme cela sera précisé plus loin.

Le dispositif doit, en outre, enregistrer une ou deux empreintes de doigts de l'opérateur qui sera ensuite seul habilité à utiliser le dispositif. Ce dernier est alors prêt à être utilisé.

Lorsque l'opérateur souhaite faire appel à un service assuré par l'ordinateur 15, il commence par relier à ce dernier l'unité centrale 12, au travers du modem 14, selon les procédures habituelles, en donnant son identité, par exemple au moyen d'un code d'entrée du type appelé code PIN.

Parallèlement, il enclenche le dispositif 10, l'enclenchement pouvant se faire par simple exposition à la lumière quand la source d'énergie est formée de cellules photo-électriques, puis il applique, sur le capteur biométrique 26, le doigt dont l'empreinte est enregistrée. L'empreinte du doigt appliqué est lue et traitée par le microprocesseur 30 et l'information obtenue est comparée avec celle enregistrée dans la mémoire 32b. Si la comparaison aboutit à la concordance des formes, alors le microprocesseur 30 interroge le capteur photo-électrique 22.

Si la source d'énergie est formée de cellules photo-électriques, le dispositif comportera avantageusement un condensateur dont la capacité permet d'assurer les pointes de consommation correspondant aux périodes durant lesquelles l'électronique de commande 28 est fortement sollicitée.

Le dispositif 10 est ensuite appliqué contre l'écran 16, aligné sur les repères 16b, de manière à ce que le capteur 22 se trouve en regard de l'image 16a.

Comme le pas de la matrice des cellules photo-électriques 22a du capteur 22 est deux à trois fois inférieur à celui de la matrice de points affichée par l'image 16a, plusieurs cellules voisines reçoivent la même information. Par une analyse de proximité, il est possible au microprocesseur 30 de reconstituer l'image 16a et, par-là son équivalent binaire. Cet équivalent est traité par le programme de décryptage du microprocesseur 30, pour obtenir le code qui est affiché sur la cellule d'affichage 24. Il reste alors à l'opérateur à introduire ce code au moyen du clavier 18 dans l'unité centrale 12 et, au travers du modem 14, à l'adresser à l'ordinateur 15, lequel le compare avec celui de référence. En cas de concordance, l'ordinateur permet alors la transaction.

De la sorte, l'ordinateur 15 connaît avec certitude la personne avec laquelle il est en liaison, par la combinaison du verrouillage biométrique et du dispositif de décryptage. De plus, l'opérateur peut être certain que sa carte ne pourra pas être utilisée par une autre personne, même en cas de perte ou de vol.

Il va de soit que le dispositif est agencé de manière à ce que le contenu de la mémoire 32b soit sécurisé, en d'autres termes que son contenu ne puisse pas être lu ou reproduit. Cela peut être fait de manière bien connue par l'homme du métier, par l'application de moyens connus sous le nom de "tampering proof".

Dans les cas où le code est relativement court, il pourrait être possible qu'une personne ne disposant pas d'un dispositif selon l'invention se connecte avec l'ordinateur 15 et, lorsque l'image 16a apparaît, elle envoie un code au hasard qui lui donne accès à l'ordinateur 15, de manière non autorisée. Un tel abus peut être écarté en exigeant deux codes successifs.

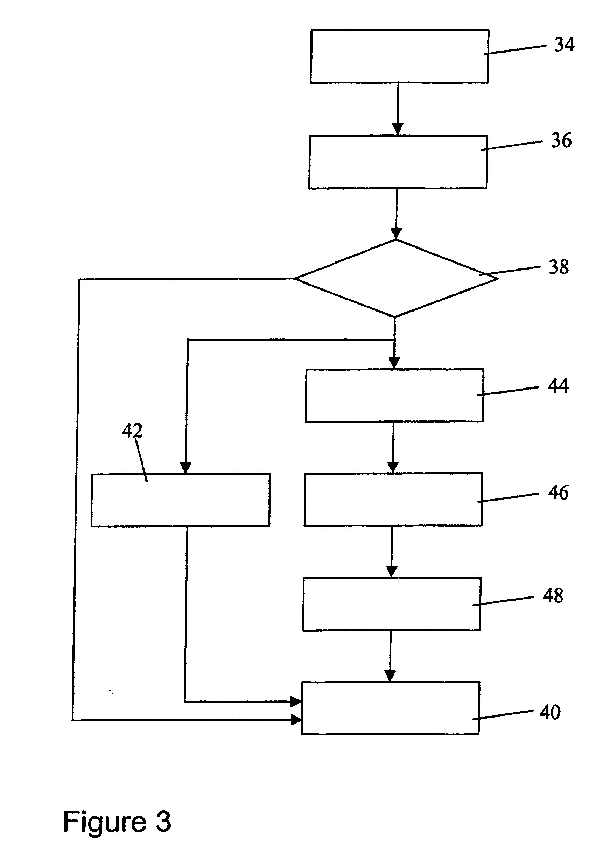

La figure 3 représente un organigramme des programmes appliqués par le microprocesseur 30. La première opération 34 consiste à enclencher le dispositif. L'empreinte de l'opérateur est ensuite lue en 36, puis comparée avec l'information se trouvant dans la mémoire 32b. Si la comparaison arrive à un résultat négatif, le dispositif est, sans autre, arrêté, comme représenté en 40. Si la réponse est positive, un temporisateur est mis en route en 42 et le microprocesseur 30 traite les informations recueillies par le capteur 22 et les décrypte en 46, pour obtenir le code d'accès. Ce dernier est ensuite adressé en 48 à l'affichage 24 pour le rendre accessible à l'opérateur.

En d'autres termes, le microprocesseur 30 agit comme un organe de verrouillage - déverrouillage, disposé entre le capteur photo-électrique 22 et la cellule d'affichage 24, et ne permettant la lecture du code que si l'empreinte lue par le capteur 26 est conforme aux informations se trouvant dans la mémoire morte programmable 32b.

Lorsque le temps de temporisation est écoulé, qui est de l'ordre de la minute, le dispositif est arrêté, comme indiqué en 40.

Le dispositif selon l'invention peut faire l'objet de nombreuses variantes. Le nombre de points que comporte la matrice 16a peut varier considérablement en fonction de la sécurité qu'on souhaite avoir dans la communication.

La matrice de points peut être remplacée par une image, colorée ou non, le microprocesseur étant alors pourvu d'un programme en permettant l'analyse. Les moyens de communication pourraient aussi être formés d'une source sonore, ce qui permettrait, par exemple, à un mal-voyant de profiter des avantages du dispositif.

La lecture d'une empreinte digitale est particulièrement simple et efficace. Il serait également possible d'appliquer la même méthode à d'autres parties de l'organisme de l'opérateur, par exemple à l'iris de l'oeil.

Les applications de ce dispositif sont nombreuses. En plus du commerce électronique, on peut encore l'utiliser avec des appareils de distributeurs de billets de banque, l'écran de lecture et le cadran de commande suffisant pour la communication avec l'ordinateur 15. Ils peuvent également assurer une fonction de carte d'électeur, pour l'accomplissement d'actes tels qu'un vote électronique par réseau Internet, voire même de carte d'identité, ou être associés à un passeport.

Il est aussi possible de commander l'accès à des informations confidentielles stockées dans un ordinateur, sans pour autant devoir passer par un modem. Dans ce cas, l'ordinateur 15 est directement relié à l'écran 16 et au clavier 18.

Il est bien entendu que le dispositif comporte une mémoire vive, de type RAM par exemple, qui n'a pas été décrite, pour le stockage d'informations en cours de traitement.

## Revendications

1. Dispositif de sécurité (10) pour transaction en ligne entre un pourvoyeur de service muni d'un ordinateur(15) et un opérateur muni d'un poste de type informatique, relié au moins médiatement et de manière interactive avec ledit ordinateur, et comportant un écran (16) et un clavier (18), lequel dispositif comprend:
- un capteur photo-électrique (22) destiné à être appliqué contre ledit écran (16) pour recevoir un signal provenant dudit ordinateur (15),
- une mémoire morte (32a), dans laquelle un programme d'analyse du signal et un programme de décryptage sont enregistrés,
- une mémoire morte de type programmable (32b), dans laquelle des informations spécifiques à l'opérateur peuvent être enregistrées,
- un microprocesseur (30) pour mettre en application lesdits programmes et assurer le traitement et le décryptage du signal reçu par le capteur (22), au moyen des informations contenues dans la mémoire (32), et le transformer en un code, et
- des moyens de communication (24) pour rendre accessible ledit code à l'opérateur, pour lui permettre de l'introduire au moyen du clavier (18) et le transmettre audit ordinateur (15), en vue d'autoriser ladite transaction,
**caractérisé en ce qu'**il comporte, en outre un capteur biométrique (26) agencé pour saisir des données relatives à l'opérateur, et des moyens de verrouillage-déverrouillage disposés entre le capteur photo-électrique (22) et les moyens de communication (24), **en ce que** ladite mémoire morte (32a) comprend un programme de traitement de l'information provenant du capteur biométrique (26), et **en ce que** ledit microprocesseur (30) est agencé pour:
- mettre (36) en application le programme de traitement pour générer une information, à partir des données saisies par ledit capteur biométrique (26),
- comparer (38) l'information ainsi obtenue avec les informations contenues dans la mémoire morte de type programmable (32b),
- commander (42) le déverrouillage par les moyens de verrouillage-déverrouillage en cas de conformité,
- transmettre (48) ledit code aux moyens de communication pour le rendre accessible à l'opérateur.

2. Dispositif selon la revendication 1, **caractérisé en ce que** lesdits moyens de communication sont une cellule d'affichage (24).

3. Dispositif selon l'une des revendications 1 et 2, **caractérisé en ce que** ledit capteur biométrique (26) est agencé pour lire une empreinte digitale.

4. Dispositif selon l'une des revendications 1 à 3, destiné à lire un signal provenant de l'ordinateur affiché à l'écran sous forme d'une matrice de points (16a), **caractérisé en ce que** le capteur photo-électrique (22) est formé d'une matrice de cellules photo-électriques (22a), dont le pas est au moins deux fois plus petit que le pas de la matrice de points, et d'une optique disposée à l'avant de chacune desdites cellules pour faire converger la lumière provenant d'une portion seulement de l'écran (16), plus petite qu'un desdits points de la matrice (16a).

5. Dispositif selon la revendication 4, **caractérisé en ce que** ladite optique est formée d'une lentille convergente.

## Patentansprüche

1. Sicherheitsvorrichtung (10) zur on-line Transaktion zwischen einem mit einem Rechner (15) ausgestatteten Serviceprovider und einem Operator, der mit einem Datenverarbeitungsgerät ausgestattet ist, das zumindest mittelbar und interaktiv mit dem Rechner verbunden ist und einen Bildschirm (16) und eine Tastatur (18) umfasst, wobei die Vorrichtung folgendes umfasst:
- einen photoelektrischen Aufnehmer (22), der dazu bestimmt ist, an den Bildschirm (16) angelegt zu werden, um eine von dem Rechner (15) kommendes Signal zu empfangen,
- einem Festspeicher (32a), in dem ein Programm zur Analyse des Signals und ein Programm zur Dechiffrierung abgespeichert ist,
- einem programmierbaren Festspeicher (32b), in dem für den Operator spezifische Informationen abgespeichert sind,
- einem Mikroprozessor (30), um die Programme anzuwenden und die Verarbeitung und Dechiffrierung des von dem Aufnehmer (22) empfangenen Signals mittels der in dem Speicher (32) enthaltenen Informationen sicherzustellen und es in einen Kode umzuwandeln, und
- Kommunikationsmittel (24), um den Kode für den Operator zugänglich zu machen, um es ihm möglich zu machen, ihn hinsichtlich der Autorisierung der Transaktion mittels der Tastatur (18) einzugeben und ihn zu dem Rechner (15) zu übertragen,
**dadurch gekennzeichnet, dass** sie außerdem einen biometrischen Aufnehmer (26), der dafür ausgelegt ist, den Operator betreffende Daten zu erfassen, und Blockier-Deblockiermittel umfasst, die zwischen dem photoelektrischen Aufnehmer (22) und den Kommunikationsmitteln (24) angeordnet sind, dass der Festspeicher (32a) ein Programm zur Verarbeitung der von dem biometrischen Aufnehmer (26) kommenden Information umfasst, und dass der Mikroprozessor (30) dafür ausgelegt ist:
- das Verarbeitungsprogramm anzuwenden (36), um eine Information aus den von dem biometrischen Aufnehmer (26) erfassten Daten zu erzeugen,
- die so erhaltene Information mit den in dem Festspeicher der programmierbaren Art (32b) enthaltenen Informationen zu vergleichen (38),
- im Falle der Übereinstimmung die Deblockierung durch die Blockier-Deblockiermittel auszulösen (42),
- den Kode zu den Kommunikationsmitteln zu übertragen (48), um sie dem Operator zugänglich zu machen.

2. Vorrichtung nach Anspruch 1, **dadurch gekennzeichnet, dass** die Kommunikationsmittel eine Anzeigezelle (24) sind.

3. Vorrichtung nach einem der Ansprüche 1 bis 2, **dadurch gekennzeichnet, dass** der biometrischen Aufnehmer (26) dafür ausgelegt ist, einen Fingerabdruck zu lesen.

4. Vorrichtung nach einem der Ansprüche 1 bis 3, die dazu bestimmt ist, ein von dem Rechner kommendes Signal zu lesen, das auf dem Bildschirm in Form einer Punktmatrix (16a) angezeigt ist, **dadurch gekennzeichnet, dass** der photoelektrische Aufnehmer (22) aus einer Matrix von photoelektrischen Zellen (22a), deren Schrittweite zumindest um das Doppelte kleiner als die Schrittweite der Punktmatrix ist, und einer Optik besteht, die vor jeder der Zellen angeordnet ist, um das Licht zu sammeln, das nur von einem Teil des Bildschirm (16) kommt, der kleiner als einer der Punkte der Matrix (16a) ist.

5. Vorrichtung nach Anspruch 4, **dadurch gekennzeichnet, dass** die Optik von einer Sammellinse gebildet wird.

## Claims

1. Security device (10) for on-line transaction between a service provider furnished with a computer (15) and an operator furnished with a station of computer type, linked at least mediately and in an interactive manner with the said computer, and comprising a screen (16) and a keyboard (18), which device comprises:
- a photo-electric sensor (22) intended to be applied against the said screen (16) so as to receive a signal originating from the said computer (15),
- a read only memory (32a), in which a program for analysing the signal and a decryption program are recorded,
- a read only memory of programmable type (32b), in which information specific to the operator may be recorded,
- a microprocessor (30) for implementing the said programs and for carrying out the processing and the decryption of the signal received by the sensor (22), by means of the information contained in the memory (32), and for transforming said signal into a code, and
- communication means (24) for rendering the said code accessible to the operator, so as to allow him to enter it by means of the keyboard (18) and transmit it to the said computer (15), with a view to authorizing the said transaction,
**characterized in that** it comprises, in addition a biometric sensor (26) devised so as to capture data relating to the operator, and locking/unlocking means disposed between the photo-electric sensor (22) and the communication means (24), **in that** the said read only memory (32a) comprises a program for processing the information originating from the biometric sensor (26), and **in that** the said microprocessor (30) is devised so as to:
- implement (36) the processing program so as to generate an information item, from the data captured by the said biometric sensor (26),
- compare (38) the information item thus obtained with the information contained in the read only memory of programmable type (32b),
- order (42) the unlocking by the locking/unlocking means in case of conformity,
- transmit (48) the said code to the communication means so as to render it accessible to the operator.

2. Device according to Claim 1, **characterized in that** the said communication means are a display cell (24).

3. Device according to either of Claims 1 and 2, **characterized in that** the said biometric sensor (26) is devised so as to read a fingerprint.

4. Device according to one of Claims 1 to 3, intended to read a signal originating from the computer displayed on the screen in the form of a matrix of dots (16a), **characterized in that** the photo-electric sensor (22) is formed of a matrix of photo-electric cells (22a), whose pitch is at least twice as small as the pitch of the matrix of dots, and of an optic disposed in front of each of the said cells so as to bring about the convergence of the light originating from only a portion of the screen (16), which portion is smaller than one of said dots of the matrix (16a).

5. Device according to Claim 4, **characterized in that** the said optic is formed of a convergent lens.
